# FASCICULE DE BREVET EUROPEEN

(11) **EP 3 638 984 B1**
(45) Date de publication et mention de la délivrance du brevet: **20.12.2023**
(21) Numéro de dépôt: 18748968.7
(22) Date de dépôt: 13.06.2018
(51) Int. Cl.: G01D 5/353, D03D 15/00

(54) **SYSTEME DE DETECTION APTE A GENERER UN SIGNAL ELECTRIQUE REPRESENTATIF D'UNE VARIATION D'INTENSITE LUMINEUSE ET CAPTEUR DE PRESSION INTEGRANT UN TEL SYSTEME DE DETECTION**
ERFASSUNGSANORDNUNG ZUR ERZEUGUNG EINES ELEKTRISCHEN SIGNALS REPRESENTATIV EINER SCHWANKUNG EINER LICHTINTENSITÄT UND DRUCKSENSOR MIT EINER SOLCHEN ERFASSUNGSANORDNUNG
DETECTION SYSTEM FOR GENERATING AN ELECTRICAL SIGNAL REPRESENTING A VARIATION OF A LIGHT INTENSITY AND PRESSURE SENSOR INCLUDING SUCH A DETECTION SYSTEM

(30) Priorité: 14.06.2017 FR 1755382
(43) Date de publication de la demande: 22.04.2020
(73) Titulaire: Brochier Technologies, 69100 Villeurbanne (FR)
(72) Inventeur: BROCHIER, Cédric, 69007 Lyon (FR); CHEVALIER, Delphine, 26300 Chateauneuf Sur Isere (FR); DEFLIN, Emmanuel, 69003 Lyon (FR); MORANGE, Julien, 69140 Rillieux La Pape (FR); MORETTI, Constance, 69009 Lyon (FR); PICOT-CLEMENTE, Jérémy, 89110 Villiers Sur Tholon (FR)
(74) Mandataire: Cabinet Laurent & Charras
(86) Numéro de dépôt international: PCT/FR2018/051398
(87) Numéro de publication internationale: WO 2018/229438

(56) Documents cités:
- FR-A1- 2 908 864
- US-A- 4 763 984
- US-A- 5 339 223
- US-A1- 2016 051 832
- US-B1- 6 788 295

## Description

### DOMAINE TECHNIQUE

L'invention se rapporte au domaine des capteurs de pression. Une force de pression exercée à la surface de tels capteurs peut être détectée et permet de générer un signal de commande d'un organe annexe. L'invention vise plus particulièrement les capteurs de pression intégrant des systèmes de détection permettant de générer un signal électrique représentatif d'une variation d'intensité lumineuse.

### ART ANTERIEUR

De façon générale, les systèmes de détection aptes à générer un signal électrique représentatif d'une variation d'intensité lumineuse, comprennent un élément photosensible apte à transformer l'énergie solaire en énergie électrique.

Certains systèmes de détection peuvent notamment intégrer des fibres optiques positionnées chacune dans une cavité ajustée aux dimensions de la fibre optique. Les déformations de la fibre optique engendrent une variation de l'intensité lumineuse transmise. Dans ce cas il est possible d'équiper l'une des extrémités de la fibre optique avec une source lumineuse et l'autre extrémité de la fibre optique avec un élément photosensible. Un tel type dispositif forme alors un capteur de pression tel que notamment décrit dans le document FR-2 672 681.

Cependant, ce type de dispositif est complexe à réaliser et permet uniquement d'identifier l'intensité d'un effort à la surface de ce capteur. Il ne permet donc pas de localiser la position exacte d'application de l'effort sur la surface du capteur.

Pour palier cet inconvénient, il a été également imaginé et décrit dans le document WO 00/73982 de positionner deux tronçons de fibres optiques parallèlement à l'intérieur d'une cavité ajustée aux dimensions des deux tronçons de fibres optiques. Un premier tronçon de fibre optique est connecté à une source de lumière tandis que l'autre tronçon de fibre optique est connecté à un élément photosensible. Dans ce cas, la pression du doigt d'un utilisateur à proximité des extrémités libres des tronçons de fibres optiques permet de rapprocher ces extrémités et d'augmenter ainsi la quantité d'énergie transmise entre le premier tronçon et le second tronçon.

Il est également connu du document US 4 763 984 un capteur de lumière formé de deux éléments textiles -l'un émetteur, l'autre capteur- comprenant chacun des fibres optiques avec des zones à forte courbure permettant d'émettre ou de capter de la lumière.

Cependant, ce type de capteur est complexe à fabriquer et nécessite de positionner manuellement les différentes fibres à l'intérieur de cavités. Ainsi, un tel dispositif n'est pas adapté pour générer un nombre important de zones de capture distinctes, de même que des zones de grandes dimensions et notamment supérieure à un mètre carré.

Ainsi, un objectif de l'invention est de faciliter la fabrication des systèmes de capture, des capteurs, notamment de pression, comportant des fibres optiques et aptes à générer un signal électrique représentatif d'une variation d'une intensité lumineuse.

### EXPOSE DE L'INVENTION

La présente invention concerne un capteur de pression dont les caractéristiques principaux et subsidiaires sont définies par les revendications annexées. Les modes de réalisation et exemples décrits ci-après qui ne sont pas couverts par les revendications annexées sont considérés comme ne faisant pas partie de l'invention, et sont simplement fournis pour faciliter la compréhension de l'invention.

Un système de détection apte à générer un signal électrique représentatif d'une variation d'intensité lumineuse comprend :
- un élément textile comprenant un premier groupe de fibres optiques comportant sur leur surface périphérique des altérations permettant de capter latéralement la lumière au niveau d'au moins une zone de captation de l'élément textile, les fibres optiques du premier groupe étant regroupées en au moins un faisceau au niveau d'au moins une bordure de l'élément textile ;
- au moins un élément photosensible agencé en regard d'au moins une extrémité du faisceau de fibres optiques du premier groupe et permettant de générer un signal électrique fonction de la variation d'intensité lumineuse captée latéralement par les fibres optiques au niveau de ladite zone de captation de l'élément textile.

Autrement dit, les fibres optiques sont agencées à l'intérieur d'un élément, textile pouvant présenter des fils annexes permettant d'assujettir dans une position prédéterminée les fibres optiques les unes par rapport aux autres. De cette manière, les fibres optiques peuvent être agencées sensiblement parallèlement les unes par rapport aux autres et présenter une cohésion facilitant leur manipulation ainsi que leur mise en place dans un dispositif annexe dans lequel le système de détection peut être positionné.

Par ailleurs, les fibres optiques comportent des altérations qui peuvent consister en un dépolissage de la surface extérieure de chacune des fibres. Ces altérations peuvent également être formées par des incisions permettant la transmission à l'intérieur des fibres optiques d'un rayon lumineux, naturel ou artificiel incident au niveau de la surface périphérique des fibres optiques. Il est également possible que les altérations soient générées par un traitement thermique ou chimique appliqué aux fibres optiques.

Les fibres optiques sont alors regroupées selon au moins un faisceau au niveau d'une bordure de l'élément textile de façon par exemple à mettre en regard les extrémités des fibres optiques avec un élément photosensible, comme par exemple une photodiode. La lumière captée par la surface latérale des fibres optiques est donc transmise au niveau d'au moins une de leurs extrémités à l'élément photosensible.

Selon une variante, cet élément photosensible peut être une cellule photovoltaïque. Il est ainsi possible de réaliser des systèmes photovoltaïques intégrant une ou plusieurs de ces éléments textiles pour la production d'électricité.

En pratique, tout ou partie des fibres optiques de l'élément textile peuvent être recouverte d'une couche d'enduction en matériau présentant des propriétés optiques adaptatives, notamment en fonction de l'environnement ambiant. Par exemple, il est possible de choisir des matériaux ayant la capacité de changer de coloration (couleur, opacité, transparence...) sous l'effet d'un stimulus (lumière, température, pression, taux d'humidité, etc.). Ainsi, il est par exemple possible de réaliser des dispositifs de détection d'une variation de l'environnement ambiant, comme par exemple une variation météorologique.

L'élément textile peut comporter un second groupe de fibres optiques comportant sur leur surface périphérique des altérations permettant d'émettre latéralement la lumière au niveau d'au moins une zone d'émission agencée à proximité immédiate de la zone de captation du premier groupe de fibres optiques, les fibres optiques du second groupe étant regroupées en au moins un faisceau au niveau d'au moins une bordure de l'élément textile. Le système de détection peut en outre comporter au moins une source de lumière agencée en regard des extrémités du faisceau de fibres optiques du second groupe et permettant d'émettre un signal lumineux à l'intérieur du faisceau. Le système de détection peut également être couplé à une source de lumière extérieure.

En d'autres termes, l'élément textile comporte deux groupes de fibres optiques, l'un permettant d'émettre latéralement de la lumière et l'autre permettant de capter la lumière émise.

L'une des applications possibles d'un tel système de détection peut être la détection de présence. Ainsi, lorsqu'un utilisateur positionne un objet ou une partie de son corps au contact, ou à proximité immédiate, du système de détection, la lumière est réfléchie sur l'objet puis captée par le premier groupe de fibres optiques. Cette réflexion de lumière génère donc une variation d'intensité lumineuse captée par le premier groupe de fibres optiques.

Pour ce faire, la source de lumière peut utiliser un type de rayon lumineux présentant une longueur d'onde prédéterminée et par conséquent, il peut ne pas être influencé par le rayonnement extérieur tel que le rayonnement solaire ou généré par des moyens d'éclairage d'une pièce notamment.

Il est également possible d'envisager l'utilisation d'un tel élément textile pour la réalisation de système de communication sans fil connue sous l'acronyme LiFi (acronyme anglo-saxon pour "Light Fidelity") basé sur l'utilisation de la lumière visible. Le principe du LiFi repose sur le codage et l'envoi de données via la modulation d'amplitude ou de fréquence des sources de lumière selon un protocole bien défini et standardisé. Ainsi, il est possible d'envoyer et/ou de recevoir des données via les zones de captation et d'émission réalisées dans l'élément textile.

En pratique, l'élément textile peut être un tissu comportant en chaîne et/ou en trame des fibres optiques du premier groupe et des fils de liage agencés en trame et/ou en chaîne.

Ainsi, les fibres optiques sont tissées avec des fils de liage qui permettent de maintenir en position les fibres optiques les unes par rapport aux autres à l'intérieur de l'élément textile. Selon une variante, tout ou partie des fils de liage peuvent être élastique.

Avantageusement, le tissu peut comporter en chaîne et/ou en trame les fibres optiques du second groupe. Dans ce cas, il est possible de positionner parallèlement et alternativement une fibre optique du premier groupe à côté d'une fibre optique du second groupe, et ce sur toute la surface du tissu.

L'invention concerne ainsi un capteur de pression comportant un système de détection tel que précédemment décrit et :
- un second élément textile comprenant un autre groupe de fibres optiques comportant sur leur surface périphérique des altérations permettant d'émettre latéralement la lumière au niveau d'au moins une zone d'émission agencée en regard de la zone de captation du premier groupe de fibres optiques de l'élément textile, les fibres optiques de l'autre groupe étant regroupées en au moins un faisceau au niveau d'au moins une bordure de l'élément textile ;
- une couche perméable à la lumière agencée entre les deux éléments textiles et apte à se déformer élastiquement pour permettre un rapprochement entre les deux éléments lorsqu'un effort est appliqué sur le capteur de pression.

Avantageusement, le capteur de pression peut être couplé à une source lumineuse extérieure ou intégrer une source lumineuse interne. Ainsi, selon un mode de réalisation, le capteur de pression peut également comprendre au moins une source de lumière agencée en regard d'une extrémité du faisceau de fibres optiques de l'autre groupe et permettant d'émettre un signal lumineux à l'intérieur du faisceau.

Autrement dit, un tel capteur de pression comporte à la fois un système de détection présentant un premier élément textile intégrant un premier groupe de fibres optiques pour capter la lumière, et un second élément textile intégrant un autre groupe de fibres optiques pour émettre la lumière à l'intérieur du capteur de pression. De préférence, le premier élément textile, la couche perméable et le second élément textile sont disposés en couche, la couche perméable étant positionnée entre les deux éléments textiles et présentant des propriétés d'élasticité de façon à permettre le retour en position de l'élément textile déplacé une fois l'effort supprimé. Ainsi, lorsqu'une personne ou un objet exerce un effort à la surface du capteur de pression, celui-ci rapproche l'une de l'autre les deux éléments textiles et améliore ainsi la transmission de la lumière. Ceci engendre alors une augmentation de l'intensité lumineuse captée par l'élément photosensible agencé à l'extrémité des fibres optiques du premier groupe.

Le niveau de transparence ou d'opacité de la couche perméable peut notamment être modulé en fonction de la précision de détection que l'on souhaite donner au système. On comprend par exemple qu'une couche translucide laissera passer plus de lumière entre les deux éléments textiles lors d'un rapprochement de ces deux éléments textiles résultant d'une pression exercée sur l'une ces éléments textiles.

Par exemple, il est possible d'utiliser une couche perméable en matériau translucide comportant des charges capable de faire varier l'opacité de la couche perméable en fonction de la pression appliquée sur l'un des éléments textiles, et donc de faire varier la quantité de lumière passant entre les deux éléments textiles.

En pratique, la couche perméable à la lumière peut être obtenue de différentes manières et notamment être constituée par un matériau annexe positionné entre les deux éléments textiles ou encore par un élément de l'une des éléments textiles, à savoir des fils ou une couche d'enduction.

Ainsi, selon un premier mode de réalisation, la couche perméable à la lumière peut être formée par une feuille de mousse. Dans ce cas, la feuille de mousse constitue un élément indépendant rapporté entre les deux nappes textiles ou encore une couche d'enduction de l'une des deux éléments textiles.

Selon un second mode de réalisation, la couche perméable à la lumière peut être formée par des fils de liage appartenant à au moins une des deux éléments textiles. Ces fils de liage peuvent par exemple présenter un diamètre supérieur à celui des fibres optiques du premier et/ou de l'autre groupe.

Selon un troisième mode de réalisation, la couche perméable peut être obtenue par un tissage ou tricotage de type tridimensionnel (3D) qui permet dès lors de lier les deux éléments textiles entre eux et de générer un espace creux rempli d'air entre deux fils de liage distants l'un de l'autre. L'élément textile supérieur, c'est-à-dire celle destinée à être sollicitée par un effort, est dès lors apte à se déplacer à l'intérieur de l'espace rempli d'air ménagé entre les deux fils de liage. Le tricotage ou tissage 3D peut être réalisé en utilisant des fils annexes ou en utilisant directement tout ou partie des fils de liage des fibres optiques.

Selon un mode de réalisation particulier, la source de lumière peut émettre dans le spectre du visible ou non, par exemple des rayons lumineux de type infrarouge, de sorte que le rayonnement lumineux du soleil ainsi que celui d'un éclairage intérieur n'influe pas sur la variation d'intensité lumineuse détectée par l'élément photosensible.

Un autre type de système de détection apte à générer un signal électrique représentatif d'une variation d'intensité lumineuse comporte :
- un élément textile comprenant une pluralité de fibres optiques comportant sur leur surface périphérique des altérations permettant d'émettre latéralement la lumière au niveau d'au moins une zone d'émission et étant sensibles à la réflexion lorsqu'un objet tend vers le contact avec lesdites altérations, les fibres optiques étant regroupées à chaque extrémité en au moins un faisceau au niveau d'au moins une bordure de l'élément textile ;
- au moins un élément photosensible agencé en regard d'une extrémité du faisceau de fibres optiques positionné au niveau d'une bordure de l'élément textile, l'élément photosensible permettant de générer un signal électrique fonction de la variation d'intensité lumineuse transmise par les fibres optiques.

Le système de détection peut en outre comprendre au moins une source de lumière agencée en regard d'une extrémité du faisceau de fibres optiques positionné au niveau d'une première bordure de l'élément textile et permettant d'émettre un signal lumineux à l'intérieur desdites fibres optiques. Le système de détection peut être couplé à une source de lumière extérieure.

Autrement dit, les altérations ménagées sur les fibres optiques permettent à la fois d'émettre de la lumière au niveau d'une zone d'émission, mais également de réfléchir la lumière lorsqu'un objet est positionné au contact ou à proximité des fibres optiques de manière à masquer localement la zone d'émission. Ainsi, lorsqu'un objet masque une partie de la zone d'émission des fibres, l'intensité lumineuse captée par l'élément photosensible est plus importante que lorsqu'aucun objet ne vient réfléchir la lumière émise.

De même que précédemment, la source de lumière autonome peut émettre dans le spectre visible ou non, par exemple des rayons lumineux de type infrarouge, afin de rendre le système de détection insensible à la lumière extérieure telle que la lumière solaire ou celle d'un éclairage artificiel.

De même que précédemment, l'élément textile peut être un tissu comportant en chaîne et/ou en trame des fibres optiques du premier groupe et des fils de liage agencés en trame et/ou en chaîne. En outre, tout ou partie des fils de liage peuvent être élastiques. Par ailleurs, les fibres optiques peuvent également être recouvertes d'une couche d'enduction en matériau ayant des propriétés optiques adaptatives.

Bien entendu, pour l'ensemble des modes de réalisation présenté ci-dessus, la disposition de l'ensemble des fibres optiques dépendra de l'application choisie. Ainsi, un grand nombre de configuration est envisageable, comme par exemple une disposition en matrice des zones d'émission et/ou de captation, ou encore suivant un motif particulier.

En pratique, l'élément textile comprenant les fibres peut se présenter sous différentes formes, par exemple sous la forme d'une nappe textile, ou tout élément textile obtenu par exemple par un procédé de tissage, de tricotage, de broderie, de tressage, etc., et éventuellement mis en forme de manière à former une structure 3D. Une telle structure 3D peut par exemple être sous la forme d'un cylindre formant ainsi un guide de lumière.

### DESCRIPTION SOMMAIRE DES FIGURES

La manière de réaliser l'invention ainsi que les avantages qui en découlent, ressortiront bien de la description du mode de réalisation qui suit, donné à titre indicatif et non limitatif, à l'appui des figures annexées dans lesquelles :
Les figures 1 à 9 représentent schématiquement des systèmes de détection aptes à générer un signal électrique représentatif d'une variation d'intensité lumineuse générée par une source extérieure tel un éclairage ou le soleil.
Les figures 10, 11, 12, 13A et 13B représentent, quant à elles, schématiquement des systèmes de détection aptes à générer un signal électrique représentatif d'une variation d'intensité lumineuse et dans lesquelles la source de lumière est intégrée dans une même nappe textile avec les moyens de capture.
Les figures 14A, 14B et 15A, 15B représentent, quant à elles, schématiquement des capteurs de pression comportant un système de capture tel que décrit dans les figures 1 à 9.

### MANIERE DE REALISER L'INVENTION

Un système de détection apte à générer un signal électrique représentatif d'une variation d'intensité lumineuse est décrit ci-après.

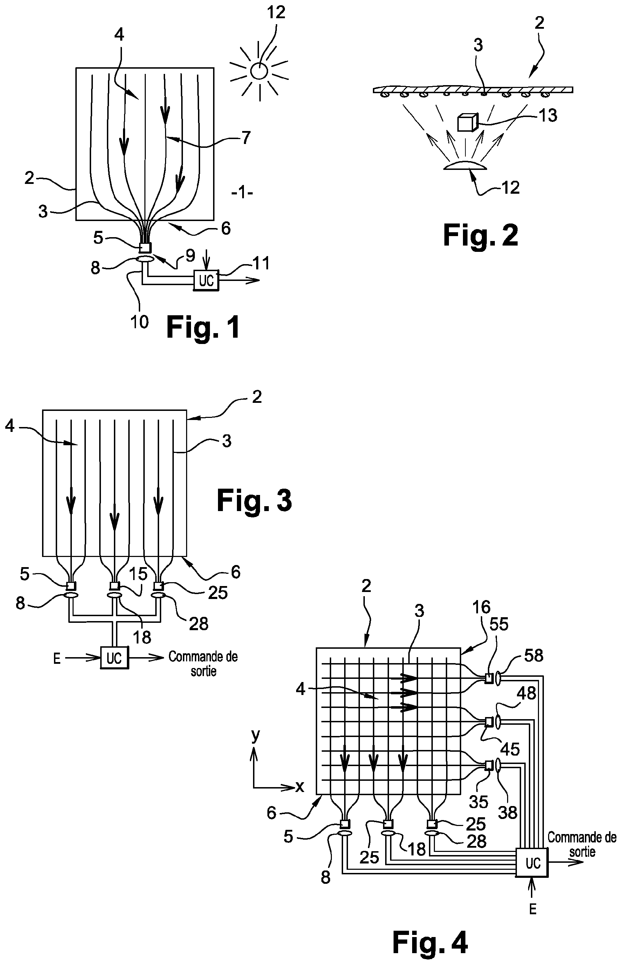

Un tel système de détection peut être inclus dans différents dispositifs ou capteurs. Ainsi, tel que représenté aux figures 1 à 9, de tels systèmes de détection peuvent être utilisés afin de détecter une ombre à leur surface.

Pour ce faire et tel que représenté à la figure 1, le système de détection **1** comporte un élément textile, par exemple une nappe textile **2** dans ce mode de réalisation particulier, à l'intérieur de laquelle sont agencées des fibres optiques **3** permettant de capter la lumière émise par une source extérieure telle que le soleil **12** au niveau d'au moins une zone de captation de la lumière **4**. De telles fibres optiques **3** présentent donc des altérations à leur surface périphérique de façon à capter latéralement la lumière. Les fibres optiques **3** appartiennent à un premier groupe et émergent de la nappe textile **2** au niveau d'une lisière **6** pour être regroupées sous la forme d'un faisceau **5**.

Une extrémité **9** du faisceau **5** est alors positionnée au regard d'un élément photosensible **8** permettant de convertir en énergie électrique le rayonnement capté par les fibres optiques. Le signal électrique peut alors être transmis par voie filaire **10** à une unité de commande **11** pour générer ensuite un signal de commande pouvant être analysé, ou encore servir à commander des moyens motorisés ou encore un organe d'affichage d'informations.

Tel que représenté à la figure 2, lorsqu'un objet **13** s'interpose entre la nappe textile **2** et la source de lumière **12**, une zone d'ombre est détectée par les fibres optiques **3** et il est alors possible de détecter la variation d'intensité lumineuse générée par l'objet **13**.

Tel que représenté à la figure 3, les fibres optiques **3** peuvent être regroupées en plusieurs faisceaux **5**, **15**, **25** de fibres optiques et générer ainsi différentes zones de captation **4**, **14**, **24** de la lumière. Ces zones sont définies grâce aux différents faisceaux **5**, **15**, **25** de fibres optiques et peuvent, par conséquent, être agencée parallèlement sur toute la surface de la nappe textile **2**. Les différents faisceaux émergent de la nappe textile au niveau d'une lisière **6** et sont mis en regard de plusieurs éléments photosensibles **8**, **18**, **28** eux-mêmes connectés à une unité de contrôle.

Tel que représenté à la figure 4, les fibres optiques **3** peuvent être agencées à la fois en trame et/ou en chaîne à l'intérieur de la nappe textile **2** qui est, dans ce cas particulier, un tissu. Cet agencement particulier permet alors de déterminer la position en abscisse et en ordonnée de l'ombre d'un objet projetée sur la nappe textile. Les faisceaux de fibres optiques **5**, **15**, **25** émergent ainsi au niveau d'une première lisière **6** tandis que les faisceaux de fibres optiques **35**, **45**, **55** émergent au niveau d'une seconde lisière **16** de la nappe textile. Un tel système de capture peut notamment être utilisé de façon à mesurer les déplacements d'un objet à sa surface et être inséré dans un revêtement de sol permettant de recouvrir un hall ou une salle dans laquelle des personnes sont amenées à passer ou à se déplacer.

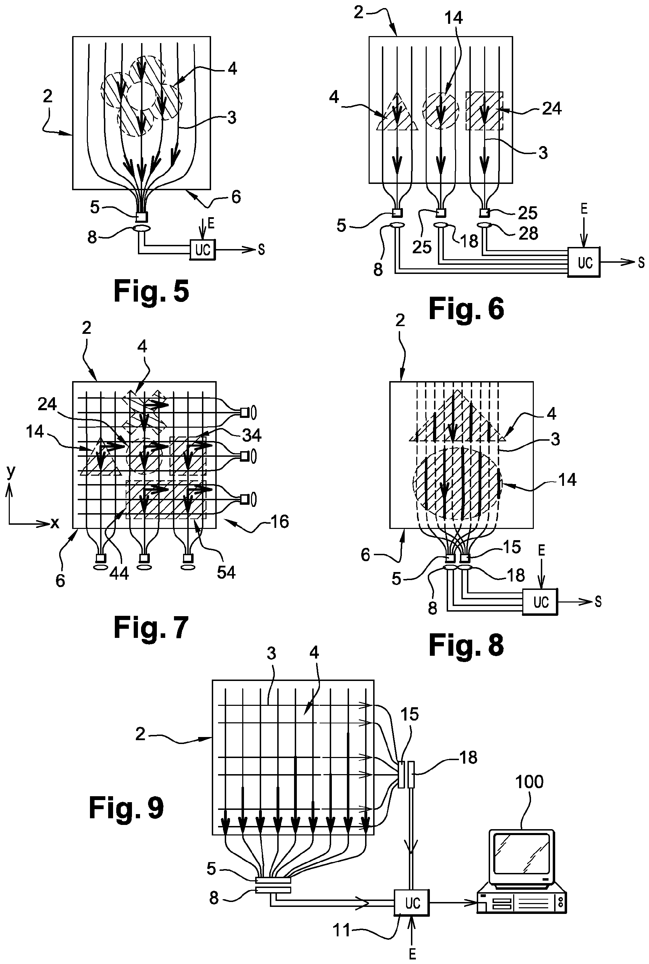

Tel que représenté à la figure 5, les fibres optiques **3** de la nappe textile **2** peuvent présenter des altérations positionnées uniquement au niveau d'une zone de captation de la lumière **4,** laquelle présentant une forme géométrique particulière. Dans ce cas, la zone de captation de la lumière **4** ne s'étend pas sur la totalité de la nappe textile **2** et est donc localisée.

De même, et tel que représenté à la figure 6, une nappe textile **2** peut présenter plusieurs zones de captation de la lumière **4**, **14**, **24** délimitées par des formes particulières correspondant à la position des altérations générées sur la surface périphérique des fibres optiques **3**. Par suite, en utilisant par exemple trois faisceaux de fibres optiques **5**, **15**, **25**, il est possible de réaliser, dans ce cas particulier, l'analyse de la présence ou de l'absence de l'ombre d'un objet au niveau des trois zones de captation de la lumière **4**, **14**, **24**.

Ainsi, tel que représenté à la figure 7, en utilisant plusieurs faisceaux de fibres optiques émergeant de deux lisières **6**, **16** de la nappe textile **2**, il est possible de réaliser une multitude de zones de captation de la lumière **4**, **14**, **24**, **34**, **44**, **54** délimitées par le positionnement des altérations sur les fibres optiques. Un tel mode de réalisation permet notamment de réaliser les dispositifs de type clavier ou tout organe de commande prémuni de touches.

Enfin, dans la variante représentée à la figure 8, il est possible de réaliser au moins deux zones de captation de la lumière **4**, **14** situées sur les fibres optiques émergeant au niveau d'une lisière unique **6** de la nappe textile **2**. Pour ce faire, la nappe textile **2** peut être réalisée par un procédé de tissage de type Jacquard permettant de positionner à différentes profondeurs les fibres optiques en fonction de leur faisceau de connexion **5, 15**. Ainsi, les fibres optiques appartenant au faisceau **5** sont affleurantes au niveau de la zone de captation **4** et peuvent être traitées de façon à générer des altérations uniquement sur les fibres optiques de ces faisceaux **5**. Les fibres optiques sont ensuite positionnées au niveau de la face inférieure de la nappe textile **2** et ne sont donc pas traitées au niveau de la zone de captation **14**. De même, les fibres optiques appartenant au faisceau **15** sont alors positionnées au niveau de la face supérieure de la nappe textile **2** dans la zone de captation **14**, puis positionnées au niveau de la face inférieure de la nappe textile **2** dans la zone de captation **4**.

Tel que représenté à la figure 9, il est également possible d'utiliser des éléments photosensibles **8,18** aptes à détecter les variations d'intensité lumineuse de chaque fibre optique appartenant à un même faisceau **5, 15** positionné en lisière de la nappe textile **2.** De cette manière, l'élément photosensible présente une pluralité de pixels éclairés par une ou plusieurs fibres optiques et le traitement par un système informatisé **100** permet alors de connaître la position exacte d'un objet à la surface de la nappe textile **2,** de la même manière qu'avec le système de capture illustré à la figure 4, mais avec uniquement un faisceau **5, 15** de fibres optiques au niveau de deux lisières de la nappe textile.

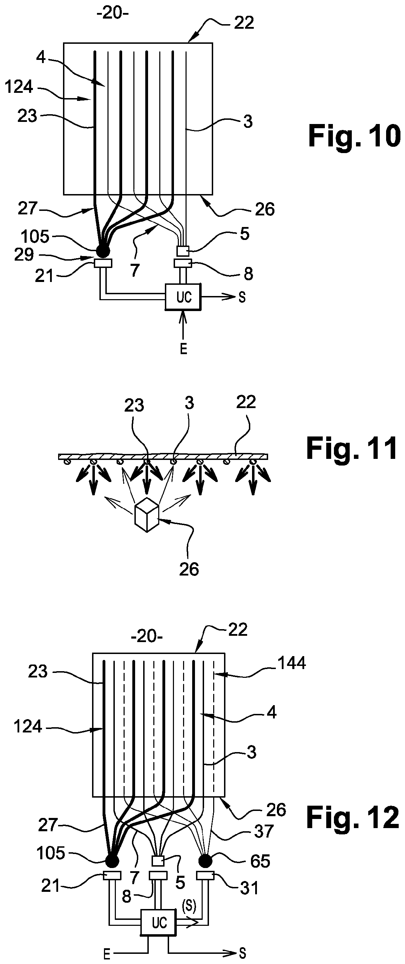

Tel que représenté à la figure 10, un système de capture **20** peut également comporter un second groupe **27** de fibres optiques **23** comportant des altérations à leur surface périphérique de façon à émettre de la lumière au niveau d'une zone d'émission **124.** Cette zone d'émission **124** est agencée à proximité de la zone de captation **4** des fibres optiques **3** du premier groupe **7.**

Par ailleurs, une source de lumière **21**, qui peut être autonome ou non, est agencée en regard de l'extrémité **29** d'un faisceau **105** de fibres optiques appartenant au second groupe **27**. Tel que représenté, les fibres optiques **3**, **23** peuvent être agencées parallèlement au niveau de la nappe textile **22** et émerger au niveau d'une même lisière **26** pour faciliter leur connexion avec d'une part, la source de lumière **21**, et d'autre part, l'élément photosensible **8**.

Ainsi, tel que représenté à la figure 11, lorsqu'un objet **26** est positionné à proximité ou au contact de la nappe textile **22**, celui-ci réfléchit la lumière émise par les fibres optiques **23** et génère donc une augmentation localisée de la lumière captée par les fibres optiques **3**. Un tel système de détection permet donc de réaliser un capteur d'objet réfléchissant **26**. En effet, certains objets peuvent ne pas réfléchir la lumière émise par les fibres optiques **23** et ne sont donc pas identifiables par le système de détection.

Tel que représenté à la figure 12, le système de détection **20** peut également présenter des fibres optiques présentant des altérations au niveau de leur périphérie pour émettre de la lumière visible au niveau de la nappe textile **22**. Cette zone d'émission de la lumière **144** est également agencée à proximité immédiate de la zone de captation **4** et permet d'informer un utilisateur que la capture de variation d'intensité lumineuse au niveau de la nappe textile **22** a bien été réalisée par l'élément photosensible **8** et traitée par l'unité de contrôle. Ces fibres optiques éclairantes forment également un groupe **37** de fibres optiques connectées en faisceau **65** au niveau de la lisière **26** de la nappe textile **22.** Ce faisceau **65** est, quant à lui, mis en regard d'une autre source de lumière générant par exemple des rayons lumineux dans le domaine du visible.

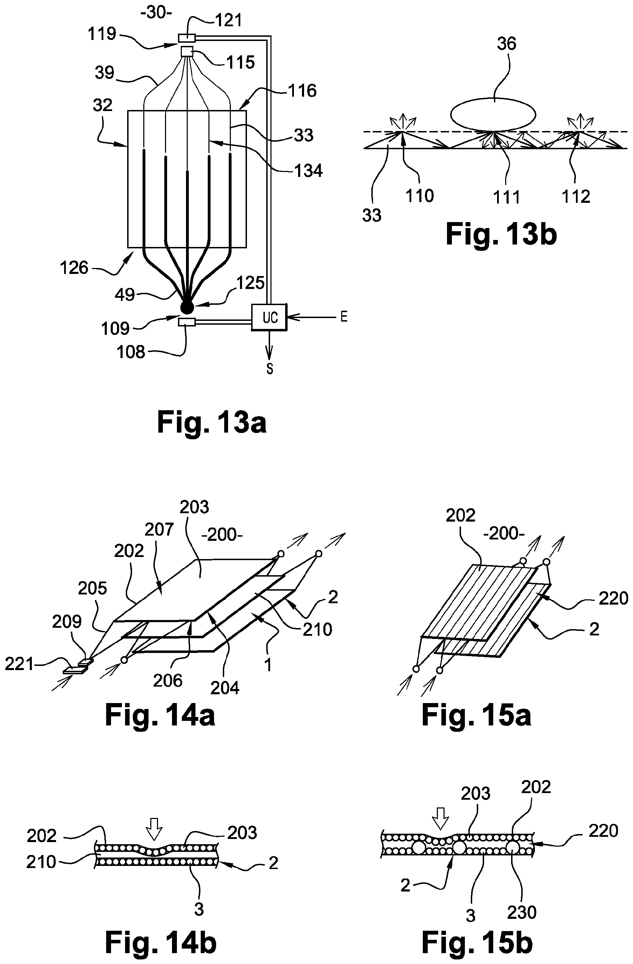

Tel que représenté à la figure 13A, le système de détection **30** peut également être réalisé en utilisant une nappe textile **32** dans laquelle les fibres optiques **33** permettent à la fois d'émettre de la lumière au niveau de des altérations et de réfléchir la lumière lorsqu'un objet vient recouvrir la surface extérieure de la nappe textile **32**. Par conséquent, chaque extrémité **39**, **49** des fibres optiques **33** présente un faisceau **115**, **125** agencé au niveau de lisières opposées **116**, **126.** L'extrémité **119** du faisceau **115** est mise en regard d'une source de lumière **121**. Par ailleurs, l'extrémité **109** du faisceau **125** est mise en regard d'un élément photosensible **108** capable de détecter une variation de l'énergie lumineuse transmise par les fibres optiques et éventuellement réfléchie par un objet au niveau de la zone d'émission **134** des fibres optiques **33**.

Dans une variante du mode de réalisation illustré à la figure 13A, il est possible de remplacer la source de lumière **121** par un autre élément photosensible. Dans cette variante, le système de détection comprendra ainsi deux éléments photosensibles disposés en regard des extrémités **39**, **49** de fibres optiques regroupé en faisceaux **115**, **125**. Ainsi, ce système offre notamment la possibilité de détecter la lumière environnante, de localiser la lumière sur la nappe textile, de déterminer une variation de la lumière, de déterminer la présence d'un objet ou l'application d'une déformation mécanique.

Tel que représenté à la figure 13B, l'objet **36** peut notamment être formé par un doigt d'un utilisateur. Un tel doigt permet alors de masquer l'altération **111** de la fibre optique **33** tandis que les altérations **110** et **112** permettent d'émettre de la lumière vers le milieu extérieur.

Tel que représenté à la figure 14A, le système de capture **1** peut être intégré à l'intérieur d'un capteur de pression **200**. Dans ce cas, un second élément textile sous la forme d'une seconde nappe textile **202** est agencé parallèlement par rapport à la nappe textile **2** du système de détection **1**. Une telle seconde nappe textile **202** comporte des fibres optiques **203** appartenant à un autre groupe **207**. Ces fibres optiques **203** sont aptes à émettre latéralement de la lumière grâce à des altérations de la périphérie de leur surface. Au niveau d'une lisière **206**, les fibres optiques **203** sont regroupées en faisceaux **205** dont l'extrémité **209** est mise en regard d'une source de lumière **221**.

Par ailleurs, une couche perméable à la lumière **210** est positionnée contre les deux nappes textiles **2, 202** de façon à permettre un rapprochement lorsqu'un effort est appliqué à la surface de l'une ou de l'autre des deux nappes textiles. Ainsi, le capteur de pression **200** est obtenu en améliorant la transmission lumineuse lorsque les deux nappes textiles sont proches l'une de l'autre. Par conséquent, la couche perméable à la lumière **210** doit présenter une élasticité pour garantir le retour en position initiale de la nappe textile qui a été déplacée. Dans d'autres variantes, la couche perméable peut être chargée en matériau opaque, apte à augmenter l'opacité de la couche perméable lorsqu'une pression est exercée sur l'une des nappes textiles.

Tel que représenté à la figure 14B, cette couche perméable à la lumière **210** peut être formée par une feuille de mousse à cellules ouverte ou fermée, apte à revenir dans sa position de repos lorsqu'aucun effort n'est appliqué à la surface de la nappe textile **202**. Cette feuille de mouse peut être indépendante ou encore être une couche d'enduction de l'une des deux nappes textiles **2, 202.**

Par ailleurs, et tel que représenté à la figure 15A, la couche perméable à la lumière translucide **220** peut être formée par des fils de liage **230** appartenant à au moins une des deux nappes **2, 202**.

Tel que représenté à la figure 15B, un espace **231** est défini entre deux fils de liage **230** pour permettre un rapprochement entre les deux nappes textiles **2**, **202** lorsqu'un effort est appliqué. Cet espacement peut par exemple être réalisé via un tissage ou tricotage 3D à l'aide de fils annexes ou des fils de liage des fibres optiques.

Il ressort de ce qui précède qu'un système de capture et un capteur de pression conformes à l'invention présentent de nombreux avantages, et notamment :
- ils permettent de faciliter la fabrication de dispositifs de capture en générant de façon automatisée, telle que du tissage, une importante surface de captation ;
- ils sont donc particulièrement adaptés aux environnements de grandes surfaces pour détecter un déplacement en étant agencés au sol ou sur une paroi ;
- ils peuvent se présenter sous diverses formes et présenter une interface optique de capture déportée par rapport au système électrique de conversion et notamment qui peut être de plusieurs mètres, la surface optique de capture peut par ailleurs présenter une surface gauche et être découpée à façon ;
- Ils offrent la possibilité à travers un même média de combiner les fonctions détection et notification visuelle de cette détection, le capteur s'éclairant lorsque l'information est transmise.

## Revendications

1. Capteur de pression (200) **caractérisé en ce qu'**il comporte :
• un premier élément textile (2, 22) comprenant un premier groupe (7) de fibres optiques (3) comportant sur leur surface périphérique des altérations permettant de capter latéralement la lumière au niveau d'au moins une zone de captation (4) dudit premier élément textile (2, 22), les fibres optiques (3) du premier groupe (7) étant regroupées en au moins un faisceau (5) au niveau d'au moins une bordure (6) dudit premier élément textile (2, 22) ;
• au moins un élément photosensible (8) agencé en regard d'au moins une extrémité (9) d'au moins un faisceau (5) de fibres optiques (3) du premier groupe (7) et permettant de générer un signal électrique fonction de la variation d'intensité lumineuse captée latéralement par les fibres optiques (3) au niveau de ladite zone de captation (4) dudit premier élément textile (2, 22).
• un second élément textile (202) comprenant un autre groupe (207) de fibres optiques (203) comportant sur leur surface périphérique des altérations permettant d'émettre latéralement la lumière au niveau d'au moins une zone d'émission (204) agencée en regard de la zone de captation (4) du premier groupe (7) de fibres optiques (3) du premier élément textile (2), les fibres optiques (203) dudit autre groupe (207) étant regroupées en au moins un faisceau (205) au niveau d'au moins une bordure (206) du second élément textile (202) ;
• une couche perméable à la lumière (210, 220) agencée entre les deux éléments textiles (2) et (202) et apte à se déformer élastiquement pour permettre un rapprochement entre les deux éléments textiles (2, 202) lorsqu'un effort est appliqué sur ledit capteur de pression (200).

2. Capteur de pression (200) selon la revendication 1, **caractérisé en ce qu'**il comprend en outre au moins une source de lumière (221) agencée en regard d'une extrémité (209) du faisceau (205) de fibres optiques (203) dudit autre groupe (207) et permettant d'émettre un signal lumineux à l'intérieur dudit faisceau (205).

3. Capteur de pression selon la revendication 1, **caractérisé en ce que** la couche perméable à la lumière (210) est formée par une feuille de mousse.

4. Capteur de pression selon la revendication 1, **caractérisé en ce que** la couche perméable à la lumière (220) est formée par des fils de liage (230) appartenant à au moins un des deux éléments textiles (2, 202).

5. Capteur de pression selon la revendication 1, **caractérisé en ce que** la couche perméable à la lumière (220) est une couche de type tricot 3D.

6. Capteur de pression selon la revendication 1, **caractérisé en ce que** la source de lumière (221) émet des rayons lumineux non-visible.

7. Capteur de pression selon l'une des revendications 1 à 6, **caractérisé en ce que** l'élément textile (2, 22) est un tissu comportant en chaîne et/ou en trame les fibres optiques (3) du premier groupe (7) et des fils de liage agencés en trame et/ou en chaîne.

## Patentansprüche

1. Drucksensor (200), **dadurch gekennzeichnet, dass** er enthält:
• ein erstes textiles Element (2, 22) mit einer ersten Gruppe (7) optischer Fasern (3), die auf ihrer Umfangsfläche Veränderungen enthalten, mit denen seitlich das Licht in Höhe mindestens einer Erfassungszone (4) dieses ersten textilen Elementes (2, 22) aufgefangen werden kann, die optischen Fasern (3) der ersten Gruppe (7) werden dabei in mindestens einem Bündel (5) in Höhe mindestens einer Kante (6) dieses ersten textilen Elementes (2, 22) zusemmengefasst;
• mindestens ein lichtempfindliches Element (8), angeordnet gegenüber mindestens einem Ende (9) mindestens eines Bündels (5) optischer Fasern (3) der ersten Gruppe (7), welches die Erzeugung eines elektrischen Signals, als Funktion der Variation der Lichtintensität, die seitlich von den optischen Fasern (3) in Höhe dieser Erfassungszone (4) dieses ersten textilen Elementes (2, 22) aufgefangen wird, erlaubt.
• ein zweites textiles Element (202), mit einer weiteren Gruppe (207) optischer Fasern (203), die auf ihrer Umfangsfläche Veränderungen enthalten, mit denen seitlich das Licht in Höhe mindestens einer Emissionszone (204) ausgesendet werden kann, die gegenüber der Erfassungszone (4) der ersten Gruppe (7) optischer Fasern (3) des ersten textilen Elementes (2) angeordnet ist, die optischen Fasern (203) dieser weiteren Gruppe (207) werden dabei in mindestens einem Bündel (205) in Höhe mindestens einer Kante (206) dieses zweiten textilen Elementes (202) zusammengefasst;
• eine lichtdurchlässige Schicht (210, 220), angeordnet zwischen den beiden textilen Elementen (2) und (202), die in der Lage ist, sich elastisch zu verformen, um eine Annäherung zwischen den beiden textilen Elementen (2, 202) zu erlauben, wenn eine Kraft auf den erwähnten Drucksensor (200) ausgeübt wird.

2. Drucksensor (200) nach Anspruch 1, **dadurch gekennzeichnet, dass** er außerdem mindestens eine Lichtquelle (221) umfasst, angeordnet gegenüber einem Ende (209) des Bündels (205) optischer Fasern (203) der erwähnten weiteren Gruppe (207), die es erlaubt, ein Lichtsignal innerhalb dieses Bündels zu senden (205).

3. Drucksensor nach Anspruch 1, **dadurch gekennzeichnet, dass** die lichtdurchlässige Schicht (210) durch eine Schaumstofflage gebildet wird.

4. Drucksensor nach Anspruch 1, **dadurch gekennzeichnet, dass** die lichtdurchlässige Schicht (220) durch Bindefäden (230) gebildet wird, die mindestens zu. einem der beiden textilen Elemente |(2, 202) gehören.

5. Drucksensor nach Anspruch 1, **dadurch gekennzeichnet, dass** es sich bei der lichtdurchlässigen Schicht (220) um eine Schicht vom Typ 3D- Gestrick handelt.

6. Drucksensor nach Anspruch 1, **dadurch gekennzeichnet, dass** die Lichtquelle (221) nicht sichtbare Lichtstrahlen aussendet.

7. Drucksensor nach einem der Ansprüche 1 bis 6, **dadurch gekennzeichnet, dass** das textile Element (2, 22) ein Gewebe ist, dass mindestens als Kette und/ oder Schuss die optischen Fasern (3) der ersten Gruppe (7) und Bindefäden, angeordnet als Schuss- und/ oder Kettfäden enthält.

## Claims

1. Pressure sensor (200) **characterized in that** it comprises:
• a first textile element (2, 22) comprising a first group (7) of optical fibers (3) including on their peripheral surface alterations allowing light to be captured laterally in at least one capturing zone (4) of the textile element (2, 22), the optical fibers (3) of the first group (7) being grouped together into at least one bundle (5) on at least one border (6) of the textile element (2, 22);
• at least one photosensitive element (8) arranged facing at least one end (9) of at least one bundle (5) of optical fibers (3) of the first group (7) and allowing the generation of an electrical signal as a function of the variation in light intensity captured laterally by the optical fibers (3) in said capturing zone (4) of the first textile element (2, 22);
• a second textile element (202) comprising another group (207) of optical fibers (203) comprising on their peripheral surface alterations allowing the lateral emission of light from at least one emission zone (204) arranged facing the capturing zone (4) of the first group (7) of optical fibers (3) of the textile web (2), the optical fibers (203) of the said other group (207) being grouped together into at least one bundle (205) on at least one border (206) of the second textile element (202);
• a light-permeable layer (210, 220) arranged between the two textile elements (2) and (202) and capable of elastically deforming in order to enable a closing together of the two textile elements (2, 202) when an effort is applied to said pressure sensor (200).

2. Pressure sensor (200) according to claim 1, **characterized in that** it comprises at least one light source (221) arranged facing one end (209) of the bundle (205) of optical fibers (203) of said other group (207) and allowing the emission of a light signal inside of said bundle (205).

3. Pressure sensor according to claim 1, **characterized in that** the light permeable layer (210) is formed by a foam sheet.

4. Pressure sensor according to claim 1, **characterized in that** the light permeable layer (220) is formed by binding threads (230) belonging to the at least one of the two textile elements (2, 202).

5. Pressure sensor according to claim 1, **characterized in that** the light permeable layer (220) is a 3D knitted layer.

6. Pressure sensor according to claim 5, **characterized in that** the light source (221) emits non-visible light beams.

7. Pressure sensor according to any of claims 1 to 6 **characterized in that** the textile element (2, 22) is a fabric having optical fibers (3) in the warp and/or the weft of the first group (7) and binding threads arranged in warp and/or in weft.
